# EUROPÄISCHE PATENTSCHRIFT

(11) **EP 4 320 014 B1**
(45) Veröffentlichungstag und Bekanntmachung des Hinweises auf die Patenterteilung: **08.04.2026**
(21) Anmeldenummer: 22707615.5
(22) Anmeldetag: 22.02.2022
(51) Int. Cl.: B60R 5/04, B60R 13/01

(54) **LADEBODENANORDNUNG FÜR EIN KRAFTFAHRZEUG SOWIE KOFFERRAUM MIT EINER DERARTIGEN LADEBODENANORDNUNG**
LOAD FLOOR ASSEMBLY FOR A MOTOR VEHICLE, AND BOOT COMPRISING SUCH A LOAD FLOOR ASSEMBLY
ENSEMBLE PLANCHER DE COFFRE POUR VÉHICULE AUTOMOBILE, ET COFFRE COMPRENANT UN TEL ENSEMBLE PLANCHER DE COFFRE

(30) Priorität: 06.04.2021 DE 102021108504
(43) Veröffentlichungstag der Anmeldung: 14.02.2024
(73) Patentinhaber: Dr. Ing. h.c. F. Porsche Aktiengesellschaft, 70435 Stuttgart (DE)
(72) Erfinder: GRUNERT, Daniel, 71299 Wimsheim (DE)
(86) Internationale Anmeldenummer: PCT/EP2022/025059
(87) Internationale Veröffentlichungsnummer: WO 2022/214212

(56) Entgegenhaltungen:
- DE-A1- 102018 208 345
- JP-A- 2008 247 167
- JP-A- 2011 056 983
- KR-B1- 101 997 368

## Beschreibung

Die Erfindung betrifft eine Ladebodenanordnung für ein Kraftfahrzeug mit einem steifen Bodenelement, das eine Abdeckfläche zur Abdeckung einer Kofferraumaussparung und Auflageflächen aufweist, wobei die Auflageflächen in Wirkverbindung mit, die Kofferraumaussparung zumindest teilweise einschließenden, Anlageflächen stehen, wobei das Bodenelement mindestens zwei Bodenabschnitte aufweist, wobei ein erster Bodenabschnitt mit einem zweiten Bodenabschnitt mittels Scharniermitteln um eine Kraftfahrzeug-Querachse verschwenkbar verbunden ist, wobei zueinander gerichtete Stirnseiten der Bodenabschnitte Eingreifflächen aufweisen, die eine verringerte Querschnittshöhe aufweisen, derart, dass die Bodenabschnitte bei unveränderter Querschnittshöhe des Bodenelementes ineinander greifen, wobei zumindest in Kraftfahrzeug-Hochachse gesehen über der zweiten Eingreiffläche angeordnete erste Eingreiffläche im Endbereich eine zur zweiten Eingreiffläche gerichtete Abrundung aufweist, wobei die Eingreifflächen durchlaufend ausgebildet sind. Die Erfindung betrifft zudem einen Kofferraum mit einer derartigen Ladebodenanordnung.

Derartige Ladebodenanordnungen sind aus dem Stand der Technik hinlänglich bekannt. Diese dienen dazu, eine Kofferraumaussparung unter der eigentlichen Ladefläche abzudecken. In dieser Kofferraumaussparung können Kleinteile, wie zum Beispiel Kabel, Werkzeug oder auch persönliche Gegenstände vorgesehen sein, ohne dass diese im eigentlichen Kofferraum platziert werden müssen. Zudem muss das Bodenelement der Ladebodenanordnung derart steif ausgeführt sein, dass es dem Gewicht einer Beladung des eigentlichen Kofferraumes ohne Probleme standhält. Des Weiteren muss das Bodenelement derart ausgeführt sein, dass die Kofferraumaussparung für den Kraftfahrzeugnutzer leicht zugänglich ist. Eine Ladebodenanordnung, die diesen unterschiedlichen Anforderungen gerecht wird, ist aus der europäischen Patentschrift EP 3 046 809 B1 bekannt. Um eine einfache Öffnung der Kofferraumaussparung bei hoher Belastbarkeit des Bodenelementes zu gewährleisten, weisen hierbei die zueinander gerichteten Stirnseiten der Bodenabschnitte eine Anzahl von Zähnen auf, die ineinandergreifen, wobei ein obenliegender Zahn zur einfachen Verstellung eine Abrundung aufweist. Eine derartige Ladebodenanordnung weist einen relativ hohen Herstellungs- und Montageaufwand auf und ist daher teuer. Darüber hinaus ist aus der deutschen Offenlegungsschrift DE 10 2018 208 345 A1 eine ähnliche Ladebodenanordnung bekannt, bei der lediglich eine untere Flächenhälfte der beiden Bodenabschnitte eine Eingreifflächen aufweist, die von einer durchgehend ausgebildeten Stirnseite der oberen Flächenhälfte überdeckt wird. Auch diese Ausführung einer Ladebodenanordnung ist sehr aufwendig und damit teuer in der Herstellung. Die KR 101 997 368 B1, JP 2011 056983 A und die JP 2008 247167 A zeigen dahingegen durchlaufende, ineinandergreifende Eingreifflächen an beiden Bodenabschnitten, gemäß dem Oberbegriff des Anspruchs 1,
wobei jedoch eine Schwergängigkeit beim Verschwenken eines Bodenabschnittes auftritt.
Aufgabe der Erfindung ist es daher, den oben genannten Nachteil auf einfache Weise zu vermeiden.

Diese Aufgabe wird durch die Merkmale des Anspruchs 1 gelöst, wobei die Eingreifflächen ausschließlich im Bereich der Abdeckfläche des Bodenelementes vorgesehen sind, und wobei die Auflageflächen auf den Anlageflächen aufliegen. Hierdurch kann der Herstellungs- und Montageaufwand wesentlich verringert werden. Eine einfache Öffnung bei hoher Belastbarkeit des Bodenelementes ist auch bei dieser Ausführung gegeben. Zudem wird das Verschwenken der Bodenabschnitte zueinander noch einmal erleichtert. Da die Auflageflächen mit den Anlageflächen, die die Kofferraumaussparung einschließen, zusammenwirken, ist hier eine ausreichende Stabilität des Bodenelementes gewährleistet. Es sollte deutlich sein, dass anstatt zwei auch mehr Bodenabschnitte vorgesehen sein können, die zueinander verschwenkbar sind.

In einer besonders vorteilhaften Ausführungsform sind die Scharniermittel als ein Teil einer auf dem Bodenelement angeordneten textilen Oberschicht ausgebildet. Hierdurch erlangt die Laderaumanordnung ein sehr wertiges Erscheinungsbild, wobei die Scharniermittel auf besonders einfache Art und Weise realisiert sind. In einer weiteren, besonders vorteilhaften Ausführungsform weisen die Bodenabschnitte jeweils eine Unterschicht auf, die zumindest im Bereich der aufeinander liegenden Eingreifflächen steif ausgeführt ist, wobei die zweite Eingreiffläche auf der Unterschicht der ersten Eingreiffläche aufliegt. Hierdurch kann die Steifigkeit des Bodenelementes im Bereich der Scharniermittel noch einmal erhöht werden. Dadurch, dass hierbei die zweite Eingreiffläche an der von der ersten Eingreiffläche abgewandten Seite eine Abrundung aufweist, ist es auch auf einfache Weise möglich, den zweiten Bodenabschnitt, beispielsweise vom Fahrzeuginnenraum aus gegenüber dem ersten Bodenabschnitt auf einfache Weise zu verschwenken.

Die Aufgabe wird ebenfalls gelöst durch einen Kofferraum mit einer derartigen Ladebodenanordnung, wobei Anlageflächen vorgesehen sind, die eine Kofferraumaussparung einschließen und die mit entsprechenden Auflageflächen des Bodenelementes zusammenwirken.

Die Erfindung wird anhand einer Zeichnung näher erläutert, hierbei zeigt:
- Fig. 1: eine perspektivische Heckansicht eines Kraftfahrzeuges mit geöffnetem Kofferraum,
- Fig. 2: eine Draufsicht auf eine erfindungsgemäße Ladebodenanordnung,
- Fig. 3: eine Schnittansicht gemäß dem Schnitt A-A in Figur 1 und
- Fig. 4: eine Schnittansicht gemäß dem Schnitt B-B aus Figur 1.

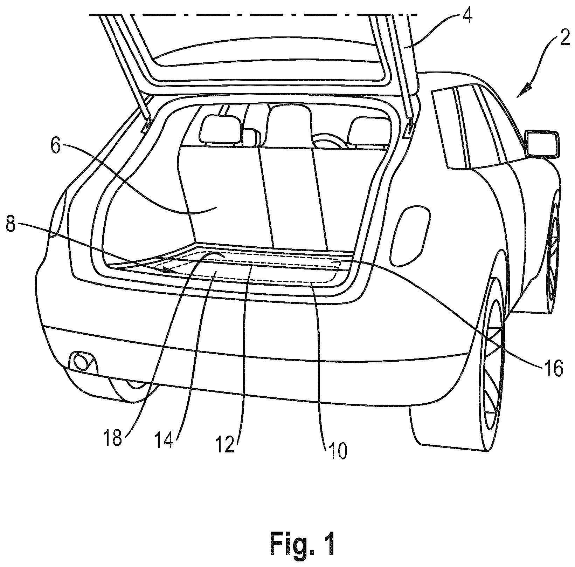

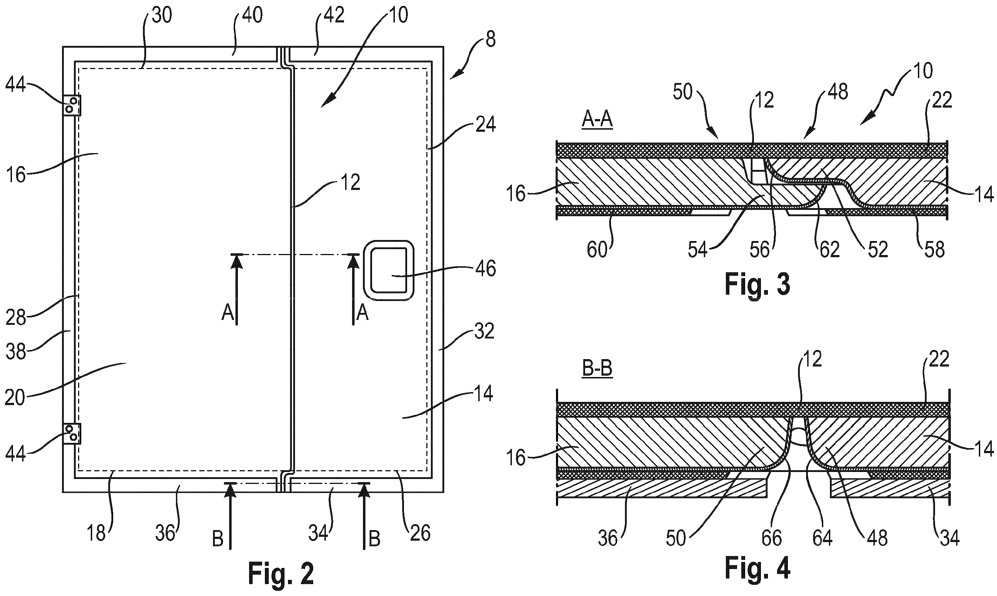

Figur 1 zeigt eine perspektivische Heckansicht eines Kraftfahrzeuges 2 mit einem geöffneten Kofferraumdeckel 4, sodass die Sicht auf ein Kofferraum 6 des Kraftfahrzeuges 2 freigegeben ist. Im Kofferraum 6 ist eine Ladebodenanordnung 8 vorgesehen, von der hier ein steifes Bodenelement 10, das zwei durch Scharniermittel 12 verbundene Bodenabschnitte 14, 16 besitzt, dargestellt. Das Bodenelement 10 ist hier transparent dargestellt, sodass eine Kofferraumaussparung 18 angedeutet ist, die durch eine Abdeckfläche 20 (siehe hierzu Figur 2) überdeckt ist.

Figur 2 zeigt nun eine Draufsicht auf die erfindungsgemäße Ladebodenanordnung 8. Der Übersicht halber wurde eine textile Obersicht 22 in dieser Ansicht weggelassen. Die textile Oberschicht 22 ist sowohl in Figur 3 als auch in Figur 4 dargestellt. Deren Funktion als Scharniermittel 12 wird auch im Zusammenhang mit diesen Figuren näher erläutert. Wie bereits im Zusammenhang mit Figur 1 angedeutet, besitzt das Bodenelement 10 eine Abdeckfläche 20 zur Abdeckung einer darunter liegenden Kofferraumaussparung 18. Die Aussparung 18 ist durch eine gestrichelte Linie angedeutet. Hierbei wird die Aussparung 18 durch Anlageflächen 24, 26, 28, 30 eingegrenzt. Die Anlageflächen 24, 26, 28, 30 befinden sich naturgemäß an der von der Kofferraumaussparung 18 abgewandten Seite der gestrichelten Linie. Das steife Bodenelement 10 weist neben der Abdeckfläche 20 Auflageflächen 32, 34, 36, 38, 40, 42 auf, die auf den Anlageflächen 24, 26, 28, 30 aufliegen. Das Bodenelement 10 ist zudem über lösbare Clipsorgane 44 mit der Anlagefläche 28 verbunden.

Um nun einen einfachen Zugang zur Kofferraumaussparung 18 zu ermöglichen, weist das Bodenelement 10 zwei Bodenabschnitte 14, 16 auf, die über Scharniermittel 12 verschwenkbar miteinander verbunden sind. Der Bodenabschnitt 14 kann hierbei einfach durch Eingreifen in eine Griffmulde 46 angehoben werden. Aber auch der Bodenabschnitt 16 ist durch Lösen der Clipsorgane 44 vom Fahrzeuginnenraum aus anzuheben.

Der Aufbau des Bodenelementes 10 und hierbei insbesondere der Aufbau der zwei Bodenabschnitte 14, 16 wird nun anhand der Figuren 3 und 4 näher erläutert. Figur 3 zeigt hierbei eine Schnittansicht des Bodenelementes 10 im Bereich des Schnittes A-A. Zunächst ist deutlich die textile Oberschicht 22 zu erkennen, die im Bereich von zueinander gerichteten Stirnseiten 48, 50 das Scharniermittel 12 ausbildet. Die Stirnseiten 48, 50 weisen jeweils in Kraftfahrzeug-Querachse durchlaufende Eingreifflächen 52, 54 auf, wobei die Eingreifflächen 52, 54 eine verringerte Querschnittshöhe gegenüber den Bodenabschnitten 14, 16 besitzen, derart, dass die Bodenabschnitte 14, 16 bei unveränderter Querschnittshöhe des Bodenelementes 10 ineinandergreifen können. Hierbei ist die Eingreiffläche 52 in Kraftfahrzeug-Hochachse gesehen über der zweiten Eingreiffläche 54 angeordnet. Durch eine derartige Ausgestaltung wird die Steifheit des gesamten Bodenelementes 10 trotz der vorgesehenen Scharniermittel 12 im Bereich der Abdeckfläche 20 gewährleistet. Um nun ein einfaches Verschwenken des ersten Bodenabschnittes 14 gegenüber dem zweiten Bodenabschnitt 16 zu gewährleisten, besitzt die erste Eingreiffläche 52 im Endbereich eine zur zweiten Eingreiffläche 54 gerichtete Abrundung 56. Des Weiteren besitzen die Bodenabschnitte 14, 16 jeweils eine Unterschicht 58, 60, die zumindest im jeweiligen Endbereich steif ausgeführt sind, wobei beim Bodenabschnitt 14 die Unterschicht 58 im Bereich der aufeinanderliegenden Eingreifflächen 52, 54 verläuft. Hierbei ist es vorteilhaft für die Steifigkeit des Bodenelementes 10, wenn die zweite Eingreiffläche 54 auf der Unterschicht 58 der ersten Eingreiffläche 52 aufliegt. Um ein einfaches Verschwenken des zweiten Bodenabschnittes 16 zu ermöglichen, besitzt die zweite Eingreiffläche 54 an der von der ersten Eingreiffläche 52 abgewandten Seite ebenfalls eine Abrundung 62.

Figur 4 zeigt nun eine Schnittansicht des Schnittes B-B in Figur 2. Hier weisen die Stirnseiten 48, 50 der Bodenabschnitte 14, 16 keine Eingreifflächen auf. Da durch Auflage auf die betreffenden Auflageflächen 34, 36, 40, 42 die Steifigkeit des Bodenelementes 10 gewährleistet ist. Es sind lediglich Abrundungen 64, 66 vorgesehen, die ein einfaches Verschwenken ermöglichen.

## Patentansprüche

1. Ladebodenanordnung für ein Kraftfahrzeug (2) mit einem steifen Bodenelement (10), das eine Abdeckfläche (20) zur Abdeckung einer Kofferraumaussparung (18) und Auflageflächen (32, 34, 36, 38, 40, 42) aufweist, wobei die Auflageflächen (32, 34, 36, 38, 40, 42) in Wirkverbindung mit, die Kofferraumaussparung (18) zumindest teilweise einschließenden, Anlageflächen (24, 26, 28, 30) stehen, wobei das Bodenelement (10) mindestens zwei Bodenabschnitte (14, 16) aufweist, wobei ein erster Bodenabschnitt (14) mit einem zweiten Bodenabschnitt (16) mittels Scharniermitteln (12) um eine Kraftfahrzeug-Querachse verschwenkbar verbunden ist, wobei zueinander gerichtete Stirnseiten (48, 50) der Bodenabschnitte (14, 16) Eingreifflächen (52, 54) aufweisen, die eine verringerte Querschnittshöhe aufweisen, derart, dass die Bodenabschnitte (14,16) bei unveränderter Querschnittshöhe des Bodenelementes (10) ineinander greifen, wobei zumindest die in Kraftfahrzeug-Hochachse gesehen über der zweiten Eingreiffläche (54) angeordnete erste Eingreifflächen (52) im Endbereich eine zur zweiten Eingreifflächen (54) gerichtete Abrundung (56) aufweist, wobei die Eingreifflächen (52, 54) durchlaufend ausgebildet sind, **dadurch gekennzeichnet, dass** die Eingreifflächen (52, 54) ausschließlich im Bereich der Abdeckfläche (20) des Bodenelementes (10) vorgesehen sind, wobei die Auflageflächen (32, 34, 36, 38, 40, 42) auf den Anlageflächen (24, 26, 28, 30) aufliegen.

2. Ladebodenanordnung nach Anspruch 1, **dadurch gekennzeichnet, dass** die Scharniermittel (12) als ein Teil einer auf dem Bodenelement (10) angeordneten textilen Oberschicht (22) ausgebildet sind.

3. Ladebodenanordnung nach einem der Ansprüche 1 oder 2, **dadurch gekennzeichnet, dass** die Bodenabschnitte (14,16) jeweils eine Unterschicht (58, 60) aufweisen, die zumindest im Bereich der aufeinander liegenden Eingreifflächen (52, 54) steif ausgeführt sind, wobei die zweite Eingreiffläche (54) auf der Unterschicht (58) der ersten Eingreiffläche (52) aufliegt.

4. Ladebodenanordnung nach Anspruch 3, **dadurch gekennzeichnet, dass** die zweite Eingreiffläche (54) an der von der ersten Eingreiffläche (52) abgewandten Seite eine Abrundung (62) aufweist.

5. Kofferraum mit einer Ladebodenanordnung nach einem der vorhergehenden Ansprüche, **dadurch gekennzeichnet, dass** Anlageflächen (24, 26, 28, 30) vorgesehen sind, die eine Kofferraumaussparung (18) einschließen und die mit entsprechenden Auflageflächen (32, 34, 36, 38, 40, 42) des Bodenelementes (10) zusammenwirken.

## Claims

1. Load floor assembly for a motor vehicle (2) with a rigid floor element (10) which comprises a covering surface (20) for covering a trunk recess (18) and bearing surfaces (32, 34, 36, 38, 40, 42), wherein the bearing surfaces (32, 34, 36, 38, 40, 42) are operatively connected to contact surfaces (24, 26, 28, 30) which at least partly enclose the trunk recess (18), wherein the floor element (10) comprises at least two floor sections (14, 16), wherein a first floor section (14) is connected to a second floor section (16) by means of hinge means (12) such that it can pivot about a transverse axis of the motor vehicle, wherein end faces (48, 50) of the floor sections (14, 16) which face one another comprise engagement surfaces (52, 54) that have a reduced cross-sectional height, such that the floor sections (14,16) engage in one another while the cross-sectional height of the floor element (10) remains unchanged, wherein at least the first engagement surface (52) which, viewed in the vertical axis of the motor vehicle is arranged above the second engagement surface (54), comprises, in the end region, a rounded portion (56) that faces the second engagement surface (54), wherein the engagement surfaces (52, 54) are continuous, **characterized in that** the engagement surfaces (52, 54) are provided exclusively in the region of the cover surface (20) of the floor element (10), wherein the bearing surfaces (32, 34, 36, 38, 40, 42) rest on the contact surfaces (24, 26, 28, 30).

2. Load floor assembly according to claim 1, **characterized in that** the hinge means (12) are configured as a part of a textile upper layer (22) arranged on the floor element (10).

3. Load floor assembly according to one of claims 1 or 2, **characterized in that** the floor sections (14,16) respectively comprise an underlayer (58, 60), wherein each underlayer is rigid at least in the region in which the engagement surfaces (52, 54) lie on top of one another, wherein the second engagement surface (54) rests on the underlayer (58) of the first engagement surface (52).

4. Load floor assembly according to claim 3, **characterized in that** the second engagement surface (54) comprises a rounded portion (62) on the side facing away from the first engagement surface (52).

5. Trunk with a load floor assembly according to one of the preceding claims, **characterized in that** contact surfaces (24, 26, 28, 30) are provided, which enclose a trunk recess (18) and cooperate with corresponding bearing surfaces (32, 34, 36, 38, 40, 42) of the floor element (10).

## Revendications

1. Agencement de plancher de chargement pour un véhicule automobile (2) comportant un élément de plancher (10) rigide, qui présente une surface de recouvrement (20) destinée à recouvrir une ouverture de coffre (18) et des surfaces d'appui (32, 34, 36, 38, 40, 42), dans lequel les surfaces d'appui (32, 34, 36, 38, 40, 42) sont en liaison fonctionnelle avec des surfaces d'installation (24, 26, 28, 30) enfermant au moins partiellement l'ouverture de coffre (18), dans lequel l'élément de plancher (10) présente au moins deux sections de plancher (14, 16), dans lequel une première section de plancher (14) est reliée à une seconde section de plancher (16) par le biais de moyens formant charnière (12) de manière pivotante autour d'un axe transversal de véhicule automobile, dans lequel des côtés frontaux (48, 50) en regard des sections de plancher (14, 16) présentent des surfaces de mise en prise (52, 54), qui présentent une hauteur en section transversale réduite, de telle sorte que les sections de plancher (14, 16), lorsque la hauteur en section transversale de l'élément de plancher (10) reste inchangée, viennent en prise l'une dans l'autre, dans lequel au moins la première surface de mise en prise (52) agencée au-dessus de la seconde surface de mise en prise (54) vue dans l'axe de hauteur de véhicule automobile, présente dans la zone d'extrémité un arrondi (56) orienté vers la seconde surface de mise en prise (54), dans lequel les surfaces de mise en prise (52, 54) sont réalisées de manière continue, **caractérisé en ce que** les surfaces de mise en prise (52, 54) sont exclusivement prévues dans la zone de la surface de recouvrement (20) de l'élément de plancher (10), dans lequel les surfaces d'appui (32, 34, 36, 38, 40, 42) reposent sur les surfaces d'installation (24, 26, 28, 30).

2. Agencement de plancher de chargement selon la revendication 1, **caractérisé en ce que** les moyens formant charnière (12) sont réalisés en tant que partie d'une couche supérieure textile (22) agencée sur l'élément de plancher (10).

3. Agencement de plancher de chargement selon l'une quelconque des revendications 1 ou 2, **caractérisé en ce que** les sections de plancher (14, 16) présentent respectivement une couche inférieure (58, 60) qui est conçue rigide au moins dans la zone des surfaces de mise en prise (52, 54) superposées, dans lequel la seconde surface de mise en prise (54) repose sur la couche inférieure (58) de la première surface de mise en prise (52).

4. Agencement de plancher de chargement selon la revendication 3, **caractérisé en ce que** la seconde surface de mise en prise (54) présente un arrondi (62) sur le côté faisant face à l'opposé de la première surface de mise en prise (52)

5. Coffre comportant un agencement de plancher de chargement selon l'une quelconque des revendications précédentes, **caractérisé en ce que** des surfaces d'installation (24, 26, 28, 30) sont prévues, qui renferment une ouverture de coffre (18) et qui coopèrent avec des surfaces d'appui (32, 34, 36, 38, 40, 42) correspondantes de l'élément de plancher (10).
